# EUROPÄISCHE PATENTSCHRIFT

(11) **EP 0 904 975 B1**
(45) Veröffentlichungstag und Bekanntmachung des Hinweises auf die Patenterteilung: **13.03.2002**
(21) Anmeldenummer: 98203282.3
(22) Anmeldetag: 30.09.1998
(51) Int. Cl.: B60N 2/00

(54) **Einrichtung für das Einstellen der Stelle eines Sitzes in ein Fahrzeug**
Apparatus for adjusting the position of a vehicle seat
Système pour régler la position d'un siège de véhicule

(30) Priorität: 30.09.1997 NL 1007180
(43) Veröffentlichungstag der Anmeldung: 31.03.1999
(60) Teilanmeldung: 99203793.7
(73) Patentinhaber: Van Ee, Teunis Karel, 3771 MB Barneveld (NL)
(72) Erfinder: Van Ee, Teunis Karel, 3771 MB Barneveld (NL)
(74) Vertreter: Ferguson, Alexander

(56) Entgegenhaltungen:
- DE-U- 9 314 844
- FR-A- 2 728 860
- US-A- 3 486 204

## Beschreibung

Die Erfindung bezieht sich auf eine Einrichtung gemaß dem Oberbegriff des Anspruchs 1.

Derartige Einrichtungen sind bekannt aus DE-U-93 14 844.5 und ermöglichen es den Sitz stufenlos zu schieben und auf diskrete Stelle an einer bestimmten Strecke der Führung entlang festzusetzen.

Derartige Einrichtungen sind weiterhin bekannt und ermöglichen es, den Sitz auf jeder Stelle an einer bestimmten Strecke der Führung entlang festzusetzen, so daß im Fall eines Tretautos der Sitz auf jeden gewünschten Abstand vom Lenkrad und Pedalen einzustellen ist. Nach einer bekannten Ausführung eines Tretautos sind unter dem Sitz zwei vertikale Führungsplatten angebracht, die entlang einen Kastenträger schieben können und die mit Hilfe eines Bolzens gegen die Seiten des Kastenträgers festzuklemmen sind. Nach einer anderen Ausführung ist ein Stück Kastenprofil über eine Führung verschiebbar und mit einem Bolzen festzusetzen.

Die bekannten Ausführungen haben den Nachteil, daß das Anziehen des Bolzens den Umfang von Klemmung bestimmt. Bei Tretautos besteht die Gefahr, daß ein Kind den Bolzen nicht fest genug anschraubt, und der Sitz während Gebrauch plötzlich verschiebt oder sich eben vom Tretauto löst, mit den entsprechenden Risiken. Andererseits besteht die Möglichkeit, daß ein älteres Kind den Bolzen zu fest anschraubt, wodurch z.B. ein jüngeres Kind den Sitz nicht einstellen kann, weil es den Bolzen nicht loskriegt.

Es ist ein Zweck der Erfindung, eine stufenlos einstellbare Einstelleinrichtung zu verschaffen, die leicht zu Bedienen und gefahrlos ist.

Dieses Ziel wird erfindungsgemäß mit einer Einrichtung der gemäß Oberbegriff erwähnten Art erreicht, die die Merkmale des kennzeichnenden Teils Anspruchs 1 aufweist.

Hiermit wird erreicht, daß ein Bolzen für das Festsetzen eines Sitzes überflüssig ist, weil die Schwerkraft diese Funktion ausübt.

Vorzugsweise sind die Klemmittel durch Drehung in der Vertikalebene auf die Führung festklemmbar.

Durch die Drehung der Klemmittel klemmen die Klemmittel sich auf die Führung fest, worauf die Klemmittel nur in dieser Position behalten werden brauchen.

Vorzugsweise sind obenerwähnte Aspekte kombiniert, wodurch das Gewicht des Sitzes und eventuell vom Benutzer die Drehung der Klemmittel zustande bringt und die Klemmittel in klemmender Position hält.

Vorzugsweise ist die Führung eine Schiene, worauf die Klemmittel festklemmbar sind, so daß eine einfache Konstruktion entsteht, und bei weiterem Vorzug haben die Klemmittel auch eine Führungsfunktion, so daß eine noch einfachere Konstruktion möglich ist.

Nach einer Vorzugsausführung umfassen die Klemmittel mindestens zwei längliche Klemmblöcke, die beiderseitig von einem Klemmstreifen der Schiene zu der Schiene parallel verlaufen, um den Klemmstreifen zwischen sich zu klemmen. Die Klemmblöcke können beim Verstellen des Sitzes also entlang die Schiene verschieben, und den Sitz festsetzen durch sich beiderseitig vom Klemmstreifen zum Klemmstreifen zu bewegen und darauf festzuklemmen.

Vorzugsweise umfaßt die Einrichtung einen Hauptkörper, der von zwei parallel frei rotierbaren Stiften, an den die Klemmblöcke hauptsächlich halbwegs ihrer Länge angeordnet sind, versehen ist, um bei Verschwenken des Hauptkörpers den Abstand zwischen den parallel verlaufenden Klemmblöcken zu ändern. Durch Verschwenken des Hauptkörpers wird der vertikale Abstand zwischen den Stiften geändert. Von dem Stand aus, worin die Stifte in einer Vertikalebene liegen, wird der vertikale Abstand bei Verschwenken des Hauptkörpers also abnehmen, wodurch der Abstand zwischen den Klemmblöcken zugleich abnimmt und die Klemmblöcke den Klemmstreifen der Schiene zwischen sich klemmen werden. Der Abstand zwischen den Klemmblöcken kann derart gewählt werden, daß kein Finger einer (Kinder) Hand zwischen Klemmstreifen und Klemmblock gebracht werden kann.

Es ist möglich, für die Schiene ein I-Profil zu benutzen. Nach einer Vorzugsausführung ist die Schiene jedoch ein Kastenprofil mit einer teilweise offenen Oberseite mit mindestens einem Klemmstreifen für die Klemmblöcke, wovon mindestens einer in dem Kastenprofil beweglich ist und einer über dem Kastenprofil beweglich ist, wobei der Hauptkörper teilweise im Kastenprofil aufgenommen ist. Hierdurch entsteht eine gute Führung der Klemmblöcke und ist das verschiebbare Teil der Einrichtung teilweise im Profil aufgenommen, so daß die Beschädigungsgefahr niedriger wird. Zugleich dient das Kastenprofil als Querführung.

Vorzugsweise ist beiderseitig von der Öffnung in der Oberseite des Kastenprofils ein Klemmstreifen vorhanden, wobei an beiden Seiten des Hauptkörpers zwei Klemmblöcke vorhanden sind, um auf beide Klemmstreifen zu klemmen. Hierdurch entsteht eine steife Konstruktion, wodurch Torsion durch vom Benutzer ausgeübte Querkräfte gut widerstanden werden kann.

Vorzugsweise besitzt der Hauptkörper im Kastenprofil eine Anschlagfläche, die als Lauffläche beim Verstellen des Sitzes dient, wodurch der Hauptkörper bei Entriegeln nicht allzuweit zurückschwenken kann und das Einstellorgan eine extra Führung im Kastenprofil besitzt.

Vorzugsweise liegt der Schwerpunkt des Hauptkörpers, des Hauptkörpers plus Sitzes und des Hauptkörpers plus Sitzes plus Benutzers in horizontaler Richtung auf Abstand von den Stiften mit Klemmblöcken, um eine gute Klemmung zu gewährleisten, so daß das Gewicht des Hauptkörpers, des Sitzes und des Benutzers ein Moment liefern, das die Klemmblöcke mit Sicherheit festklemmt.

Nach einer Vorzugsausführung ist am Hauptkörper eine Hülse für das Aufnehmen eines Stiftes an einem abmontierbaren Sitz befestigt.

Die Erfindung wird im folgenden anhand einer Vorzugsausführung erläutert werden, unter Bezug auf die Zeichnung.
Figur 1 zeigt die Einrichtung laut der Erfindung in Seitenansicht, in entriegeltem Stand.
Figur 2 zeigt die Einrichtung laut Figur 1 im Querschnitt laut Linie II-II.
Figur 3 zeigt die Einrichtung laut Figur 1 in verriegeltem Stand.
Figur 4 zeigt die Einrichtung laut Figur 3 im Querschnitt laut Linie IV-IV.

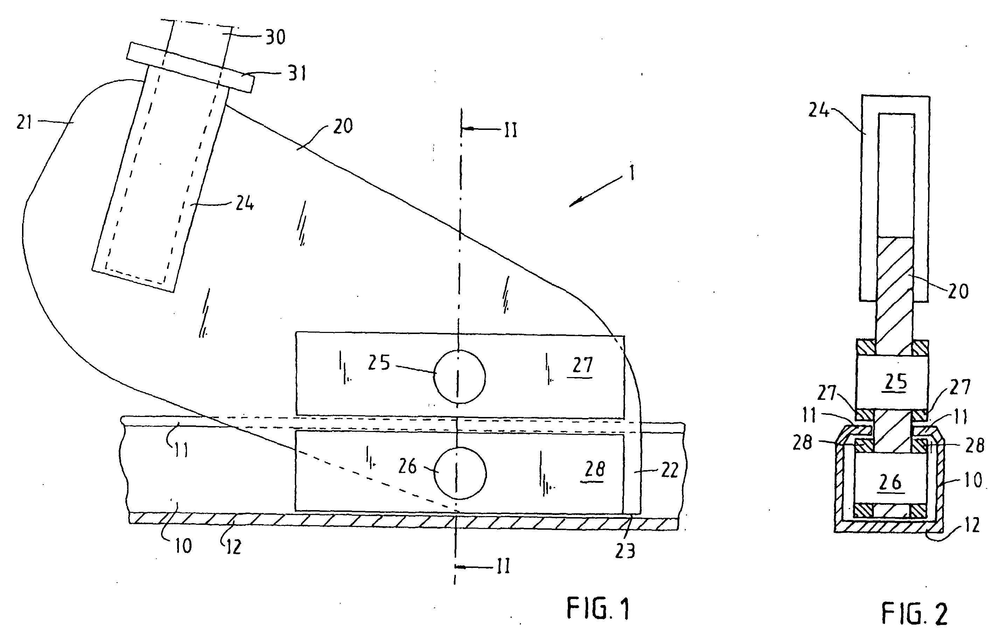

Figur 1 zeigt die Einrichtung laut der Erfindung, die aus einem Einstellorgan 1, das verschiebbar entlang und klemmbar auf einer Schiene 10 ist, besteht. Die Schiene 10 hat die Form eines Kastenprofils mit einem Boden 12 und eine in Längsrichtung offene Oberseite, wovon die Längsöffnung von zwei horizontalen, nach einander gerichteten Flanschen 11 begrenzt ist. Die Schiene 10 wird in Figur 1 im Querschnitt gezeigt.

Das Einstellorgan 1 besteht aus einem Hauptkörper 20 mit einer Vorderseite 21 und einer Hinterseite 22. Bei der Vorderseite 21 ist ein rechteckiges Kastenprofil 24 befestigt für das Aufnehmen eines Stiftes 30 der an einem Sitz (nicht gezeigt) festsitzt. Am Stift 30 ist ein Anschlag 31 befestigt, um einen Sitz auf das Kastenprofil 24 abzustützen.

In der Nähe von der Hinterseite 22 des Hauptkörpers 20 des Einstellorgans 1 sind oben einander zwei Stifte 25, 26 angeordnet, die frei in übereinstimmenden Löchern im Hauptkörper 20 drehen können. Beiderseitig vom Hauptkörper 20 sind zwei längliche Klemmblöcke 27 am Stift 25 befestigt, wovon die Unterfläche in derselben Ebene liegen. Ebenso sind beiderseitig vom Hauptkörper 20 zwei Klemmblöcke 28 am Stift 26 befestigt, wovon die Oberfläche in derselben Ebene liegen. Die untersten Klemmblöcke 28 sind in montiertem Zustand im Kastenprofil 10 aufgenommen und sind darin verschiebbar ohne zu schränken.

Figur 2 zeigt einen Querschnitt der Einrichtung laut Figur 1 entlang die Querschnittsfläche II-II durch die Stifte 25 und 26.

Figur 1 und Figur 2 zeigen die Einrichtung, wobei das Einstellorgan 1 entriegelt ist, d.h. nicht auf dem Kastenprofil 10 festgeklemmt und deshalb frei verschiebbar entlang das Kastenprofil 10 ist. In diesem Stand ist der Abstand zwischen den Klemmblöcken 27 und 28 größer als die Dicke der Flansche 11. Das Hinterende 22 des Hauptkörpers 20 besitzt eine Anschlagfläche 23, die in entriegeltem Zustand gegen den Boden 12 des Kastenprofils 10 anliegen kann und also eine Gleitfläche bildet beim Verschieben des Einstellorgans 1, um den Sitz in einen anderen Stand zu setzen. Die Anschlagfläche 23 dient auch dafür zu sorgen, daß der Hauptkörper 20 nicht weiter nach rechts kippen kann, so daß das Einstellorgan 1 einstellbar bleibt.

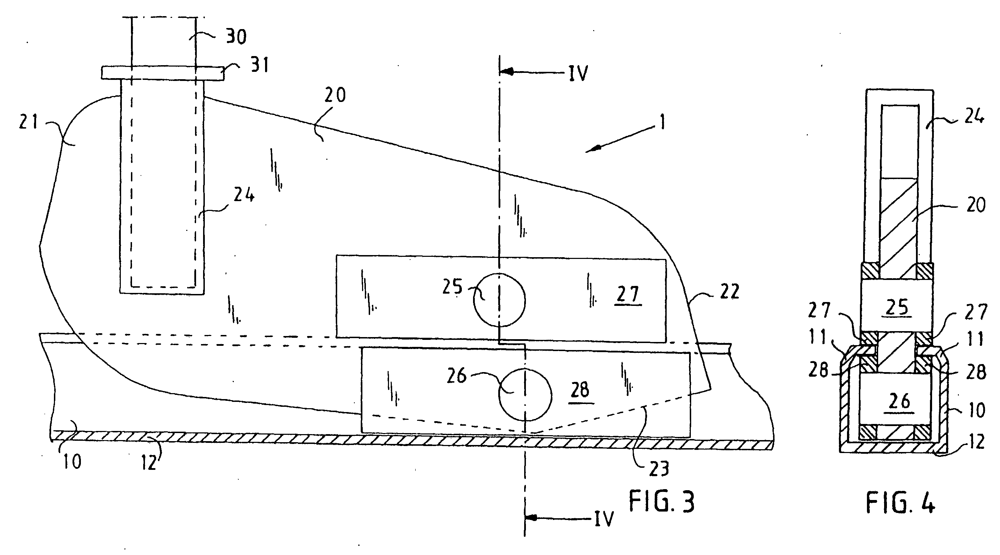

Wenn der gewünschte Stand des Sitzes gefunden werden ist, wird die Vorderseite 21 des Hauptkörpers 20 nach unten gedrückt, wodurch der Hauptkörper 20 nach links rund die Stifte 25 und 26 kippt, wodurch der verriegelte Stand laut Figur 3 entsteht. Durch das Kippen des Hauptkörpers 20 nimmt der vertikale Abstand zwischen den Stiften 25 und 26 ab. Hierdurch nimmt auch der Abstand zwischen den Klemmblöcken 27 und den Klemmblöcken 28 ab, bis dieser Zwischenabstand der Dicke der Flansche 11 entspricht. Durch vertikale Kraftausübung nach unten auf dem Vorderteil 21 des Hauptkörpers 20 werden die Flansche 11 zwischen den Klemmblöcken 27 und 28 geklemmt, wodurch das Einstellorgan 1 auf der Schiene 10 verriegelt ist.

Figur 4 zeigt den verriegelten Stand von Figur 3 im Querschnitt entlang der Schnittfläche IV-IV durch die Stifte 25 und 26 in Figur 3.

Die Klemmung der Klemmblöcke 27 und 28 kommt zustande durch das eigene Gewicht von Hauptkörper 20, das ein Moment um die Stifte 25 und 26 ausübt. Durch das Gewicht des Sitzes am Stift 30 im vertikalen Profil 24 nimmt das Klemmoment noch zu und das Gewicht des Benutzers im Sitz wird das Klemmoment noch weiter zunehmen lassen, so daß während Gebrauch keine Gefahr für Entriegelung oder Verschiebung des Einstellorgans 1 entlang die Schiene 10 besteht.

Um das Einstellorgan 1 zu entriegeln, braucht das Vorderteil 21 des Hauptkörpers 20 nur aufgehoben zu werden.

Hierdurch entriegeln die Klemmblöcke 27 und 28 automatisch und ist das Einstellorgan 1 wieder entlang die Schiene 10 verschiebbar.

Laut einer anderen Bauweise (nicht gezeigt) besitzen die Klemmblöcke 27, 28 ein sich an der Seite hinauserstreckendes zylindrisches Teil, das drehbar in den Löchern im Hauptkörper 20 aufgenommen ist. Die Stifte 25, 26 können dann wegfallen. Die obersten Klemmblöcke 27 müssen aneinander festgesetzt werden mit z.B. einem Paßbolzen, aber bei den unstersten Klemmblöcken 28 ist das nicht notwendig, weil diese im Kastenprofil 10 aufgenommen sind.

Die Klemmblöcke sind vorzugsweise aus einem verschleißfesten Kunststoff, wie Nylon, hergestellt.

Die Einrichtung laut der Erfindung hat den Vorteil, daß diese einfach und robust ist, und daß kein Einstellhebel erforderlich ist, um die Einrichtung zu bedienen. Auch ist keine Feder notwendig, um das Einstellorgan zu verriegeln, so daß auch kein Risiko auf Federbruch besteht. Die Einrichtung ist derart auszuführen, daß der maximale Abstand zwischen den Klemmblöcken 27 und den Flanschen 11 so klein ist, daß ein Finger einer (Kinder) Hand nie da zwischen gebracht werden kann, so daß die Einrichtung auch kindersicher ist, was besonders für Tretautos von großer Wichtigkeit ist.

## Patentansprüche

1. Einrichtung für das Einstellen der Stelle eines Sitzes in ein Fahrzeug, insbesondere in ein Tretauto, wobei der Sitz stufenlos über einer Führung (10) verschiebbar ist und auf die Führung (10) einzustellen ist, **dadurch** * **gekennzeichnet, daß** der Sitz stufenlos durch Klemmittel (27, 28) auf die Führung (10) einzustellen ist wobei die Klemmittel (27, 28) mit Hilfe von der Schwerkraft auf die Führung (10) festklemmbar sind.

2. Einrichtung gemäß Anspruch 1, wobei die Klemmittel (27, 28) durch Drehung in der Vertikalebene auf die Führung (10) festklemmbar sind.

3. Einrichtung gemäß Anspruch 1 oder 2, wobei die Führung eine Schiene (10) ist, worauf die Klemmittel (27, 28) festzuklemmen sind.

4. Einrichtung gemäß Anspruch 3, wobei die Klemmittel (27, 28) auch eine Führungsfunktion haben.

5. Einrichtung gemäß Anspruch 3 oder 4, wobei die Klemmittel (27, 28) mindestens zwei längliche Klemmblöcke (27, 28) umfassen, die beiderseitig von einem Klemmstreifen (11) der Schiene (10) zu der Schiene (10) parallel verlaufen, um den Klemmstreifen (11) zwischen sich zu klemmen.

6. Einrichtung gemäß Anspruch 5, wobei die Einrichtung einen Hauptkörper (20) umfaßt der mit zwei parallel frei rotierbaren Stiften (25, 26) an den die Klemmblöcke (27, 28) hauptsächlich halbwegs ihrer Länge angeordnet sind, versehen ist, um bei Verschwenken des Hauptkörpers (20) den Abstand zwischen den parallel verlaufenden Klemmblöcken (27, 28) zu ändern.

7. Einrichtung gemäß Anspruch 6, wobei die Schiene (10) ein Kastenprofil (10) ist mit einer teilweise offenen Oberseite mit mindestens einem Klemmstreifen (11) für die Klemmblöcke (27, 28), wovon mindestens einer in dem Kastenprofil (10) beweglich ist und einer über dem Kastenprofil (10) beweglich ist, wobei der Hauptkörper (20) teilweise im Kastenprofil (10) aufgenommen ist.

8. Einrichtung gemäß Anspruch 7, wobei beiderseitig von der Öffnung in der Oberseite des Kastenprofils (10) ein Klemmstreifen (11) vorhanden ist und an beiden Seiten des Hauptkörpers (20) zwei Klemmblöcke (27, 28) vorhanden sind, um auf beide Klemmstreifen (11) zu klemmen.

9. Einrichtung gemäß Anspruch 7 oder 8, wobei der Hauptkörper (20) im Kastenprofil (10) eine Anschlagfläche (23) besitzt, die als Lauffläche beim Verstellen des Sitzes dient.

10. Einrichtung gemäß Anspruch 6, 7, 8 oder 9, wobei der Schwerpunkt des Hauptkörpers (20), des Hauptkörpers (20) plus Sitzes und des Hauptkörpers (20) plus Sitzes plus Benutzers in horizontaler Richtung auf Abstand von den Stiften (25, 26) mit Klemmblöcken (27, 28) liegt, um eine gute Klemmung zu gewährleisten.

11. Einrichtung gemäß Anspruch 6, 7, 8, 9 oder 10, wobei am Hauptkörper (20) eine Hülse (24) für das Aufnehmen eines Stiftes (30) an einen abmontierbaren Sitz befestigt ist.

12. Einrichtung gemäß Anspruch 1 für das Verstellen des Abstandes zwischen Sitz und Pedale eines Tretautos, wobei in der Längsrichtung ein Kastenprofil (10) angebracht ist, mit einer teilweise offenen Oberseite und beiderseitig von der Öffnung nach einander zugerichteten Klemmstreifen (11), wobei die Unterseite eines Hauptkörpers (20) der Einrichtung in das Kastenprofil (10) steckt und da mit einem ersten frei drehbaren Stift (26) mit beiderseitig vom Hauptkörper (20) an dem Stift angeordneten untersten Klemmstrips (28) im Kastenprofil (10) versehen ist, und über dem ersten Stift (26) einen zweiten frei im Hauptkörper (20) drehbaren Stift (25) mit daran angeordneten obersten Klemmstrips (27) versehen ist, um beim Verschwenken des Hauptkörpers (20), an den der Sitz zu befestigen ist, die Klemmstreifen (11) zwischen den untersten und obersten Klemmstrips (27, 28) zu klemmen und den Sitz zu verriegeln oder zu entriegeln.

## Claims

1. Device for adjusting the position of a seat in a vehicle, in particular a go-cart, the seat being continuously displaceable on a guidance (10) and being adjustable on the guidance (10), **characterized in that** the clamping means can be clamped on the guidance with the help of gravity.

2. Device according to claim 1, in which the clamping means (27, 28) can be clamped on the guidance (10) by rotation in the vertical plane.

3. Device according to claim 1 or 2, in which the guidance is a rail (10), on which the clamping means (27, 28) can be clamped.

4. Device according to claim 3, in which the clamping means (27, 28) also have a guiding function.

5. Device according to claim 3 or 4, in which the clamping means (27, 28) comprise at least two elongated clamping blocks (27, 28), which on both sides of a clamping strip (11) of the rail (10) run parallel to the rail (10) in order to clamp the clamping strip (11) in between them.

6. Device according to claim 5, in which the device comprises a main body (20) provided with two parallel pins (25, 26) which can rotate freely, to which the clamping blocks (27, 28) are attached substantially halfway their lengths in order to change the distance between the parallel running clamping blocks (27, 28) when pivoting the main body (20).

7. Device according to claim 6, in which the rail (10) is a box profile (10) with a partially open upper side with at least one clamping strip (11) for the clamping blocks (27, 28), of which at least one can be moved in the box profile (10) and one can be moved above the box profile (10), in which the main body (20) is partially received in the box profile (10).

8. Device according to claim 7, in which on both sides of the opening in the upper side of the box profile (10) a clamping strip (11) is present, and on both sides of the main body (20) two clamping blocks (27, 28) are present to clamp on both clamping strips (11).

9. Device according to claim 7 or 8, in which the main body (20) has a stop surface (23) in the box profile (10) which surface serves as running surface when adjusting the seat.

10. Device according to claim 6, 7, 8, or 9, in which the point of gravity of the main body (20), the main body (20) plus the seat and the main body (20) plus the seat plus the user is in horizontal direction at a distance from the pins (25, 26) with clamping blocks to ensure a good clamping.

11. Device according to claim 6, 7, 8, 9, or 10, in which a socket (24) has been attached to the main body (20) for receiving a pin (30) on a detachable seat.

12. Device according to claim 1 for adjusting the distance between seat and pedals of a go-cart, in which in longitudinal direction a box profile (10) has been arranged with a partially open upper side and on both sides of the opening clamping strips facing each other, in which the lower side of a main body (20) of the device extends into the box profile (10) and is provided there with a first pin (26) which can rotate freely with on both sides of the main body (20) lower clamping strips (28) in the box profile (10) attached to the pin, and above the first pin (26) a second pin (25) which can rotate freely in the main body (20) with upper clamping strips (27) attached to it, in order to clamp the clamping strips (11) between the upper and lower clamping strips (27, 28) in order to lock or unlock the seat, when the main body (20) is pivoted, to which main body the seat can be attached.

## Revendications

1. Dispositif de réglage de la position d'un siège de véhicule, en particulier dans une voiture à pédales, le siège pouvant être déplacé en continu sur un dispositif de guidage (10) et devant être ajusté sur le dispositif de guidage (10), **caractérisé en ce que** le siège doit être ajusté en continu sur le dispositif de guidage (10) grâce à des moyens de blocage (27, 28), les moyens de blocage (27, 28) étant susceptibles d'être bloqués sur le dispositif de guidage (10) grâce à la pesanteur.

2. Dispositif selon la revendication 1, **caractérisé en ce que** les moyens de blocage (27, 28) sont susceptibles d'être bloqués sur le dispositif de guidage (10) par rotation dans le plan vertical.

3. Dispositif selon la revendication 1 ou 2, **caractérisé en ce que** le dispositif de guidage est un rail (10) sur lequel il convient de bloquer les moyens de blocage (27, 28).

4. Dispositif selon la revendication 3, **caractérisé en ce que** les moyens de blocage (27, 28) assurent également une fonction de guidage.

5. Dispositif selon la revendication 3 ou 4, **caractérisé en ce que** les moyens de blocage (27, 28) comprennent au moins deux blocs de blocage allongés (27, 28) qui s'étendent parallèlement au rail (10), de part et d'autre d'une bande de blocage (11) du rail (10), afin de coincer la bande de blocage (11) entre eux.

6. Dispositif selon la revendication 5, **caractérisé en ce que** le dispositif comprend un corps principal (20) qui est équipé de deux doigts (25, 26) parallèles, librement rotatifs, sur lesquels sont placés les blocs de blocage (27, 28) notamment sur la moitié de leur longueur, afin de modifier l'écart entre les blocs de blocage parallèles (27, 28) lors d'un pivotement du corps principal (20).

7. Dispositif selon la revendication 6, **caractérisé en ce que** le rail (10) est un profilé en caisson (10) présentant une face supérieure partiellement ouverte, pourvue d'au moins une bande de blocage (11) destinée aux blocs de blocage (27, 28), parmi lesquels au moins un est déplaçable dans le profilé en caisson (10) et un est déplaçable au-dessus du profilé en caisson (10), le corps principal (20) étant partiellement logé dans le profilé en caisson (10).

8. Dispositif selon la revendication 7, **caractérisé en ce qu'**une bande de blocage (11) est prévue de part et d'autre de l'ouverture ménagée dans la face supérieure du profilé en caisson (10) et **en ce que** deux blocs de blocage (27, 28) sont prévus de part et d'autre du corps principal (20) pour venir se coincer sur les deux bandes de blocage (11).

9. Dispositif selon la revendication 7 ou 8, **caractérisé en ce que** le corps principal (20), dans le profilé en caisson (10), possède une surface de butée (23) qui sert de surface de glissement lorsque le siège est déplacé.

10. Dispositif selon la revendication 6, 7, 8 ou 9, **caractérisé en ce que** le centre de gravité du corps principal (20), du corps principal (20) et du siège, et du corps principal (20), du siège et de l'utilisateur, est situé, dans la direction horizontale, à distance des doigts (25, 26) et des blocs de blocage (27, 28), afin de garantir un bon blocage.

11. Dispositif selon la revendication 6, 7, 8, 9 ou 10, **caractérisé en ce qu'**est fixé, sur le corps principal (20), un manchon (24) destiné à recevoir un goujon (30) présent sur un siège démontable.

12. Dispositif selon la revendication 1 destiné à modifier l'écart entre le siège et les pédales d'une voiture à pédales, un profilé en caisson (10) étant monté dans la direction longitudinale et présentant une face supérieure partiellement ouverte et des bandes de blocage (11), orientées l'une vers l'autre, situées de part et d'autre de l'ouverture, la face inférieure d'un corps principal (20) du dispositif étant insérée dans le profilé en caisson (10) et étant pourvue, dans le profilé en caisson (10), d'un premier doigt (26) librement rotatif et de bandes de blocage (28) placées sur le doigt au niveau le plus bas, de part et d'autre du corps principal (20) et, au-dessus du premier doigt (26), d'un deuxième doigt (25) librement rotatif dans le corps principal (20) et de bandes de blocage (27) situées sur le doigt au niveau le plus haut, afin que, lors du pivotement du corps principal (20) sur lequel le siège doit être fixé, les bandes de blocage (11) viennent se coincer entre les bandes de blocage inférieures et supérieures (27, 28) afin de verrouiller ou de déverrouiller le siège.
